(19) Europäisches Patentamt
European Patent Office
Office européen des brevets

(11) **EP 3 313 644 B1**

(12) **FASCICULE DE BREVET EUROPEEN**

(45) Date de publication et mention
de la délivrance du brevet:
**28.08.2019 Bulletin 2019/35**

(21) Numéro de dépôt: **16742338.3**

(22) Date de dépôt: **22.06.2016**

(51) Int Cl.:
**B29C 49/64** *(2006.01)* **B29C 49/06** *(2006.01)*
**B29C 49/12** *(2006.01)* **B29C 49/36** *(2006.01)*
**B29C 49/78** *(2006.01)*

(86) Numéro de dépôt international:
**PCT/FR2016/051527**

(87) Numéro de publication internationale:
**WO 2016/207546 (29.12.2016 Gazette 2016/52)**

(54) **PROCEDE DE CONDITIONNEMENT THERMIQUE DE PREFORMES PAR MICRO-ONDES AVEC DETECTION DE CONFORMITE DES PREFORMES**

VERFAHREN ZUR WÄRMEBEHANDLUNG VON VORFORMEN MIT MIKROWELLEN MIT ERKENNUNG DER VORFORMKONFORMITÄT

PROCESS FOR HEAT TREATING PREFORMS WITH MICROWAVES INCLUDING DETECTING PREFORM CONFORMITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1555954**

(43) Date de publication de la demande:
**02.05.2018 Bulletin 2018/18**

(73) Titulaire: **Sidel Participations**
**76930 Octeville-sur-Mer (FR)**

(72) Inventeurs:
• **FEVRE, Sébastien**
**76930 Octeville-sur-Mer (FR)**
• **TURLOTTE, Denis**
**76930 Octeville-sur-Mer (FR)**

(74) Mandataire: **Grassin d'Alphonse, Emmanuel Jean Marie**
**Sidel Participations**
**Avenue de la Patrouille de France**
**76930 Octeville-sur-mer (FR)**

(56) Documents cités:
**EP-A1- 2 647 485** **FR-A- 972 497**
**FR-A- 1 311 481** **US-A1- 2011 253 708**
**US-A1- 2014 166 642** **US-B2- 8 231 823**

**Description**

L'invention a trait au conditionnement thermique des préformes de récipients en matière plastique, notamment en PET (polytéréphtalate d'éthylène).

Plus précisément, l'invention concerne le conditionnement thermique des préformes par un champ micro-ondes issu d'un générateur à état solide, comme proposé dans le document EP 2 647 485 (Procomac).

Pour procéder à ce conditionnement thermique, on introduit chaque préforme dans une cavité résonante couplée au générateur de micro-ondes, et on soumet la préforme à un flux de micro-ondes. Comme expliqué par P. Lebaudy et al dans « Conditionnement thermique par micro-ondes de préformes avant soufflage », in Récents Progrès en Génie des Procédés, Numéro 92 (2005), certains matériaux diélectriques (il en va ainsi du PET) présentent une aptitude à se polariser sous l'effet d'un champ micro-ondes et, en fonction de la fréquence, à convertir l'énergie micro-ondes en chaleur. Ce phénomène peut avantageusement être exploité pour ramollir la matière des préformes en vue de permettre leur formage par soufflage ou étirage soufflage dans des moules à l'empreinte des récipients à obtenir.

Les analyses démontrent que le rendement énergétique du conditionnement thermique réalisé par micro-ondes est supérieur celui du conditionnement thermique classique, dans lequel on fait défiler les préformes devant des lampes à infrarouge.

Toutefois, à la différence de celui-ci, le conditionnement thermique par micro-ondes suppose que la fréquence des micro-ondes soit adaptée à chaque modèle de préforme.

Il a été constaté que le conditionnement thermique par micro-ondes risque d'être rendu partiellement (ou totalement) inopérant lorsque l'une au moins des caractéristiques d'une préforme (notamment matière ou volume) ne correspond pas au modèle. Or il est exclu de laisser une préforme non correctement chauffée (et donc insuffisamment ramollie) parvenir jusqu'au soufflage, car la rigidité de la matière serait susceptible d'endommager les composants de la machine (en particulier la tige d'étirage).

Un premier objectif de l'invention est de proposer une solution permettant d'éviter les problèmes résultant de la présence éventuelle, dans un lot de préformes en cours de conditionnement thermique, d'une préforme non conforme, c'est-à-dire ne correspondant pas au modèle auquel correspondent les réglages effectués préalablement à la production (notamment fréquence et puissance des micro-ondes).

Un deuxième objectif de l'invention est, plus particulièrement, de permettre l'éjection automatique, si cela est nécessaire à la préservation de l'installation de production, d'une préforme décrétée non conforme.

A cet effet, il est proposé un procédé de conditionnement thermique de préformes de récipients en matière plastique, dans une cavité délimitée par des parois conductrices de l'électricité, au moyen d'un champ micro-ondes dans une plage prédéterminée de fréquences, généré par un générateur à état solide couplé à la cavité au moyen d'un câble de liaison, chaque préforme ayant un corps, un fond qui ferme le corps à une extrémité inférieure de celui-ci et un col qui s'étend à une extrémité supérieure du corps, ce procédé comprenant les opérations consistant à :

- mémoriser au moins un paramètre caractéristique, prédéterminé, de la matière, ou le volume, prédéterminé, de matière de la préforme ;
- charger une préforme dans la cavité ;
- générer un flux incident de micro-ondes au moyen du générateur à état solide ;
- régler la fréquence d'émission du flux incident de micro-ondes à une fréquence de résonance de la cavité chargée ;
- mémoriser cette fréquence de résonance ;
- à partir et de la fréquence de résonance de la cavité chargée et du paramètre de matière mémorisé ou du volume, mémorisé, de matière de la préforme, calculer respectivement :

  ○ le volume de matière de la préforme, ou
  ○ au moins un paramètre caractéristique de la matière de la préforme ;

- comparer le volume de matière, respectivement le paramètre caractéristique de la matière, à une valeur de référence ;
- si le volume de matière, respectivement le paramètre caractéristique de la matière, est décrété différent de la valeur de référence, générer un signal d'alerte.

Lorsque le paramètre caractéristique de la matière mémorisé est sa constante diélectrique ε', le volume de la préforme peut être calculé à partir de l'équation suivante :

$$V_s = 0.539 \times \frac{V_C(f_0 - f_s)}{f_0(\varepsilon' - 1)}$$

où :

- $V_s$ est le volume de matière de la préforme ;
- $V_C$ est le volume de la cavité ;
- $f_0$ est la fréquence de résonance de la cavité vide ;
- $f_s$ est la fréquence de résonance de la cavité chargée ;
- $(f_0 - f_s)$ est le décalage de fréquence entre la cavité vide et la cavité chargée ;

Lorsque le paramètre caractéristique de la matière est son facteur de perte diélectrique $\varepsilon''$, le volume de la préforme peut être calculé à partir de l'équation suivante :

$$V_s = 0{,}269 \frac{V_C}{\varepsilon''} \times \left( \frac{1}{Q_{LS}} - \frac{1}{Q_{L0}} \right)$$

où :

- $Q_{L0}$ est le facteur de qualité de la cavité vide, tel que :

$$Q_{L0} = \frac{f_0}{\Delta f_0}$$

- $Q_{LS}$ est le facteur de qualité de la cavité chargée, tel que :

$$Q_{LS} = \frac{f_s}{\Delta f_s}$$

- $\Delta f_0$ est la bande passante de la courbe du coefficient de réflexion S11 de la cavité vide, pour une atténuation de -3dB,
- $\Delta f_s$ est la bande passante de la courbe du coefficient de réflexion S11 de la cavité chargée, pour une atténuation de -3dB.

Lorsque le volume de matière des préformes, prédéterminé, est mémorisé, le paramètre caractéristique de la matière peut être sa constante diélectrique $\varepsilon'$, calculée à partir de l'équation suivante :

$$\varepsilon' = 1 + 0.539 \times \frac{V_C (f_0 - f_s)}{V_s \cdot f_0}$$

Selon un autre mode de réalisation, le paramètre caractéristique de la matière peut être son facteur de perte diélectrique $\varepsilon''$, calculé à partir de l'équation suivante :

$$\varepsilon'' = 0{,}269 \frac{V_C}{V_s} \times \left( \frac{1}{Q_{LS}} - \frac{1}{Q_{L0}} \right)$$

Selon encore un autre mode de réalisation, le paramètre caractéristique de la matière peut être son angle de perte diélectrique $\delta$, calculé à partir des équations suivantes :

$$\varepsilon' = 1 + 0.539 \times \frac{V_C (f_0 - f_s)}{V_s \cdot f_0}$$

$$\varepsilon'' = 0{,}269 \frac{V_C}{V_s} \times \left( \frac{1}{Q_{LS}} - \frac{1}{Q_{L0}} \right)$$

$$\delta \cong \frac{\varepsilon''}{\varepsilon'}$$

Peuvent être prévues les opérations suivantes, déclenchées par le signal d'alerte :

- coupure du flux de micro-ondes ;
- éjection de la préforme de la cavité.

En outre, la détermination de la puissance réfléchie peut comprendre les opérations consistant à :

- mesurer la puissance du flux de micro-ondes transitant par le câble de liaison, dite puissance résultante ;
- calculer la puissance réfléchie par soustraction de la puissance résultante à la puissance incidente.

D'autres objets et avantages de l'invention apparaîtront à la lumière de la description d'un mode de réalisation, faite ci-après en référence aux dessins annexés dans lesquels :

- la figure 1 est une vue schématique montrant une installation de fabrication de récipients à partir de préformes, qui comprend une unité de conditionnement thermique des préformes et une unité de formage des récipients à partir des préformes chauffées ;
- la figure 2 est une vue en coupe d'un poste de chauffe à micro-ondes équipant l'unité de conditionnement thermique, ce poste étant muni d'une cavité résonante ;
- la figure 3 est un diagramme sur lequel est tracée une courbe montrant les variations d'un coefficient de réflexion de la cavité soumise à un flux de micro-ondes, en fonction de la fréquence de ce flux.

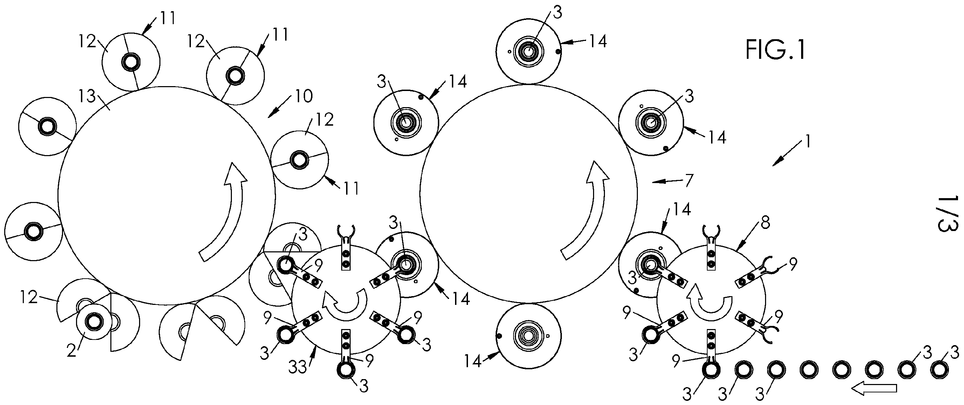

Sur la figure 1 est représentée une installation **1** pour la fabrication de récipients **2** à partir de préformes **3** en matière plastique. Chaque préforme **3** comprend un corps **4** sensiblement cylindrique de révolution autour d'un axe **X** principal, un col **5** qui s'étend à une extrémité supérieure du corps **4**, et un fond **6** hémisphérique qui ferme le corps **4** à une extrémité inférieure de celui-ci, opposée au col **5**. Le col **5** possède sa forme finale, qui demeure inchangée au cours du processus de fabrication du récipient **2**.

La matière plastique dans laquelle est réalisée chaque préforme **3** est de préférence un polyester, notamment du PET (polytéréphtalate d'éthylène), qui offre une bonne rigidité mécanique et de bonnes qualités de transparence.

Comme illustré sur la figure 1, l'installation **1** comprend une unité **7** de conditionnement thermique (ou chauffe), dans laquelle les préformes **3** sont introduites à température ambiante (c'est-à-dire, dans les pays tempérés, aux environs de 20°C, et jusqu'à environ 40°C dans les pays chauds, désertiques ou tropicaux), par ex. au moyen d'une roue **8** de transfert qui, comme dans l'exemple illustré, peut être munie d'une série de pinces **9** élastiques aptes à saisir les préformes au niveau de leur col **5** pour les espacer suivant un pas prédéterminé.

L'installation **1** comprend également une unité **10** de formage incluant une série de postes **11** de formage équipés chacun d'un moule **12** à l'empreinte du récipient **2**. L'unité **10** de formage est par exemple rotative, et comprend dans ce cas un carrousel **13** tournant sur lequel sont montés des moules **12** de type portefeuille, qui s'ouvrent pour permettre l'introduction d'une préforme **3** ayant subi une chauffe dans l'unité **7** de conditionnement thermique, et l'évacuation d'un récipient **2** formé, et se ferment pour permettre le soufflage du récipient **2** et son formage par application contre l'empreinte du moule **12**.

L'unité **7** de conditionnement thermique comprend une série de postes **14** de chauffe à micro-ondes équipés chacun d'une cavité **15** propre à accueillir une préforme **3**, et d'un générateur **16** d'ondes électromagnétiques dans le domaine des micro-ondes, couplé à la cavité **15** pour générer dans celle-ci un champ électromagnétique micro-ondes à une fréquence voisine de 2 450 MHz (ou 2,45 GHz).

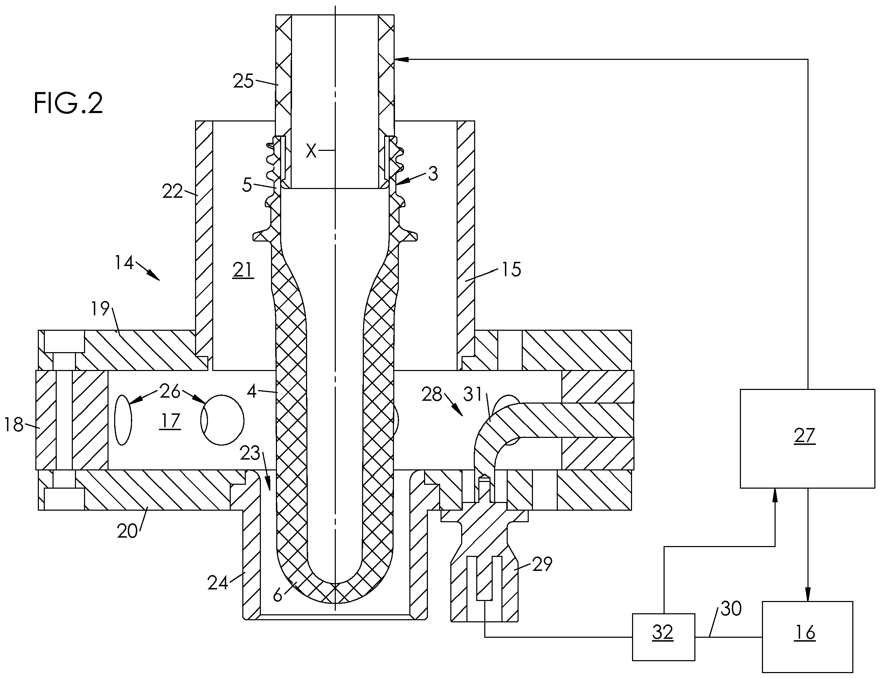

Selon un exemple de réalisation illustré sur la figure 2, la cavité **15**, réalisée dans un matériau conducteur (par ex. en acier ou, de préférence, en aluminium ou dans un alliage d'aluminium) est cylindrique de révolution autour d'un axe central qui, lorsque la préforme **3** est positionnée dans la cavité **15**, est confondu avec l'axe **X** principal de celle-ci.

Dans l'exemple illustré, la cavité **15** comprend une chambre 17 centrale cylindrique délimitée radialement par une ceinture **18** et, de part et d'autre axialement, par un couvercle **19** supérieur et un couvercle **20** inférieur annulaires fixés sur la ceinture **18**. La cavité **15** comprend également une chambre **21** supérieure cylindrique délimitée par une jupe **22** supérieure tubulaire montée sur le couvercle **19** supérieur, et une chambre **23** inférieure cylindrique délimitée par une jupe **24** inférieure tubulaire montée sur le couvercle **20** inférieur à l'opposé de la jupe **22** supérieure. Les chambres **17**, **21**, **23** communiquent entre elles pour former un volume interne délimité extérieurement par la cavité **15** et dans lequel est destinée à être positionnée une préforme **3**, comme illustré sur la figure 2. Comme on le voit sur cette figure, la préforme **3** est suspendue à un support **25**, en l'espèce un manchon réalisé dans un matériau transparent aux micro-ondes, par ex. en polytétrafluoroéthylène (PTFE, disponible notamment sous la marque Téflon).

Selon un mode de réalisation illustré sur la figure 2, la ceinture **18** est percée d'une série périphérique d'ouvertures **26** radiales. La jupe **22** supérieure et la jupe **24** inférieure peuvent être respectivement fixées au couvercle **19** supérieur et au couvercle **20** inférieur par vissage ou par emmanchement à force.

Le générateur **16** est commandé par une unité **27** de contrôle informatisée (sous forme d'un automate programmable, d'un ordinateur ou plus simplement d'un processeur). L'unité **27** de contrôle peut être propre au poste **14** de traitement ou commune à l'ensemble de ceux-ci (à condition que sa puissance de calcul soit suffisante).

Le générateur **16** de micro-ondes est un générateur dit à « *état solide* ». L'expression « *état solide* », peu usitée en Français, est une traduction littérale de l'expression anglaise « *solid state* », employée couramment depuis des décennies dans le domaine de l'électronique, et plus particulièrement dans le domaine de l'ingénierie des radiofréquences, comme le montrent les ouvrages suivants :

- Herbert L. Kraus et al. « Solid State Radio Engineering », éd. John Wiley & Sons, 1980,
- Stephen F. Adam, « Microwave theory and applications », Englewood cliffs, 1969
- Owen E. Maynard, « Solid State SPS Microwave Generation and Transmission Study », NASA Scientific and technical, 1980.

D'une manière générale, l'expression « état solide » caractérise un état de la matière dans lequel les atomes, les molécules ou les ions sont liés entre eux en sorte qu'en l'absence de contrainte mécanique ils sont fixes les uns par rapport aux autres. En électronique, l'expression « *état solide* » désigne les circuits fabriqués à l'aide de matériaux solides et dans lesquels les électrons ou autres charges porteuses d'un signal sont confinés dans ces matériaux. Aujourd'hui, ces circuits sont plus couramment appelés « circuits intégrés », ou « circuits à semiconducteurs », mais l'expression « état solide » est demeurée pour caractériser certains dispositifs électroniques complexes.

Ainsi, un générateur de micro-ondes à état solide désigne un dispositif de génération d'un signal électrique dans la gamme de fréquence des micro-ondes, dans lequel le signal est généré par un circuit intégré, par contraste avec les technologies plus anciennes (mais toujours employées) des tubes à vide (employés notamment dans les générateurs de type magnétron).

Des générateurs dits à « état solide » sont disponibles sous cette désignation dans le commerce, voir par ex. :

- chez SAIREM, le générateur micro-onde à état solide de modèle GMS 200W, qui fournit un signal micro-onde à fréquence centrale de 2 450 MHz, réglable entre 2 430 et 2 470 MHz, pour une puissance de sortie maximale de 200 W ;
- chez MKS, le générateur micro-onde à état solide de modèle SG 524, qui fournit un signal micro-onde à fréquence centrale de 2 450 MHz, réglable entre 2 400 et 2 500 MHz, pour une puissance de sortie maximale de 450 W.

Il n'entre pas dans le cadre du présent exposé de fournir une description précise d'un générateur de micro-ondes à état solide, puisque, comme nous venons de le voir, des modèles de tels générateurs existent dans le commerce et peuvent être intégrés sans adaptation particulière à la présente installation **1**.

Chaque poste **14** de chauffe comprend en outre un dispositif **28** de couplage magnétique, qui comprend un connecteur **29** monté sur la cavité **15** (et plus précisément sur le couvercle **20** inférieur) et raccordé au générateur **16** par un câble **30** coaxial, et une antenne **31** réalisée dans un matériau métallique (par ex. en cuivre ou en aluminium), reliant en boucle le connecteur **29** à la cavité **15** (et plus précisément à la ceinture **18**) pour assurer un bouclage magnétique de la cavité **15** au générateur **16**.

Le dispositif **28** de couplage permet la propagation des micro-ondes dans la cavité **15**. Moyennant un ajustement temporaire de la fréquence d'émission des micro-ondes (cet ajustement est automatique dans les modèles précités de générateurs à état solide), il s'établit, dans le volume interne délimité par la cavité **15**, un champ électrique micro-ondes stationnaire dans un mode résonant, qui présente au voisinage de l'axe central de la cavité (et donc au niveau du corps **4** de la préforme **3**) une concentration locale d'énergie.

Ainsi soumis aux micro-ondes dans les conditions qui viennent d'être décrites, le corps **4** et le fond **6** de la préforme **3** (à l'exception du col 5) sont chauffés par effet d'hystérésis diélectrique. Ce phénomène est expliqué dans P. Lebaudy et la, « Conditionnement thermique par micro-ondes de préformes avant soufflage », in Récents Progrès en Génie des Procédés, Numéro 92, 2005 et dans A. Fahrat, « Vapo-Diffusion assistée par Micro-ondes : Conception, Optimisation et Application », Thèse de l'Université d'Avignon, Nov. 2010.

En résumé, les molécules du matériau diélectrique (ici le PET) présentent, en raison de leur dissymétrie, un moment dipolaire permanent et sont orientées de manière désordonnée en l'absence de champ électrique. En revanche, soumise à un champ électrique, les molécules tendent à s'orienter suivant les lignes de champ. Ce mouvement de rotation des molécules convertit l'énergie électrique en énergie cinétique, elle-même partiellement convertie en chaleur par frottement des molécules entre elles.

Comme expliqué dans la littérature (cf. notamment Lebaudy et Fahrat, précités), le comportement d'un matériau diélectrique soumis à un champ électromagnétique est généralement caractérisé par un paramètre appelé permittivité. Il s'agit d'une grandeur complexe - au sens mathématique du terme - notée $\varepsilon^*$ et telle que :

$$\varepsilon* = \varepsilon' - j\varepsilon''$$

où

: $j$ (qui peut également être noté $i$) est tel $j^2 = -1$

$\varepsilon'$, partie réelle de $\varepsilon^*$ et qui s'exprime en F.m$^{-1}$ (Faraday par mètre), est dénommé « constante diélectrique » du matériau et caractérise l'aptitude de celui-ci à se polariser sous l'effet du champ électromagnétique auquel il est soumis. $\varepsilon'$ est indépendant de la température ;

$\varepsilon''$, partie imaginaire de $\varepsilon^*$ et qui s'exprime également en F.m$^{-1}$ (Faraday par mètre), est dénommé « facteur de perte diélectrique » du matériau et caractérise la capacité de celui-ci à convertir l'énergie électromagnétique en chaleur. $\varepsilon''$ dépend de la fréquence des ondes électromagnétiques et de la température du matériau. Plus précisément, pour le PET, $\varepsilon''$ est croissant avec la température lorsque celle-ci est comprise entre un minimum de 20°C (soit la température ambiante moyenne dans les ateliers de production aux latitudes européennes) et un maximum de 120°C environ (inférieur à la température de cristallisation).

On a coutume de lier $\varepsilon'$ et $\varepsilon''$ en introduisant un autre paramètre, noté $\delta$, appelé « angle de perte diélectrique », qui traduit le déphasage induit sur l'orientation des molécules (qui se comportent en dipôles électriques) par l'application du champ électromagnétique, et se définit par l'équation suivante :

$$tan\delta = \frac{\varepsilon''}{\varepsilon'}$$

$\varepsilon''$ étant petit devant $\varepsilon'$, on a tendance à assimiler $\delta$ à $tan\delta$, de sorte que l'on peut écrire :

$$\delta \cong \frac{\varepsilon''}{\varepsilon'}$$

Comme nous allons le voir, $\varepsilon'$ et/ou $\varepsilon''$ peuvent être utilisés pour déterminer, en cours de production :

- soit le matériau de la préforme **3** lorsque son volume de matière est supposé connu,
- soit, à l'inverse, le volume de matière de la préforme **3** lorsque son matériau est supposé connu.
  On souhaite en effet :
- éviter d'introduire dans l'unité **10** de formage une préforme qui n'aurait pas été correctement (ou pas du tout) chauffée dans l'unité **7** de conditionnement thermique, afin de ne pas mettre en péril l'installation **1**, et en particulier la tige d'étirage dont est généralement équipé chaque poste de formage et qui pourrait être endommagée si la préforme non conforme devait demeurer rigide,
- ou, le cas échéant, si la cavité **15** le permet, adapter les paramètres (puissance, fréquence) des micro-ondes pour permettre malgré tout la chauffe de la préforme non conforme, quitte à éjecter ensuite le récipient formé à partir de celle-ci, à la sortie de l'unité **10** de formage.

Dans une cavité **15** telle qu'illustrée sur la figure 2, il a été établi l'efficacité de la chauffe est maximisée pour un mode de résonance de type transverse magnétique générant une concentration d'énergie dans une zone tubulaire centrée sur l'axe **X** de la préforme **3** (confondu avec l'axe de la cavité **15**). Ce mode de résonance, bien connu, est ordinairement noté TM$_{010}$.

Pour ce mode de résonance, des équations ont été proposées dans la littérature pour calculer $\varepsilon'$ et $\varepsilon''$. Ces équations, qui correspondent à des approximations, sont notamment divulguées dans Xiang Li et al, « Design of a Cylindrical Cavity Resonator for Measurements of Electrical Properties of Dielectric Materials », Thèse de Master en électronique, Sept. 2010, pp.28 et 29 :

équation (2-36) :

$$\varepsilon' = 1 + 0.539 \times \frac{V_C(f_0 - f_s)}{V_s \cdot f_0}$$

équation (2-37) :

$$\varepsilon'' = 0{,}269 \frac{V_C}{V_s} \times \left(\frac{1}{Q_{LS}} - \frac{1}{Q_{L0}}\right)$$

où :

- $V_C$ est le volume de la cavité **15** ;
- $V_s$ est le volume de matière de la préforme **3** (également appelée charge) ;
- $f_0$ est la fréquence de résonance de la cavité **15** vide ;
- $f_s$ est la fréquence de résonance de la cavité **15** chargée ;
- $(f_0 - f_s)$ est le décalage de fréquence entre la cavité **15** vide et la cavité **15** chargée ;
- $Q_{L0}$ est le facteur de qualité de la cavité **15** vide (cf. sa définition ci-après) ;
- $Q_{LS}$ est le facteur de qualité de la cavité **15** chargée (cf. sa définition ci-après).

Parmi ces paramètres, sont connus, préalablement à la production :

- $V_C$, qui peut être simplement calculé à partir de la géométrie de la cavité **15** ;
- $f_0$ et $Q_{L0}$, qui peuvent tous deux être mesurés en phase de préproduction (c'est-à-dire avant le chargement des préformes) ;

$f_s$ - et donc $(f_0 - f_s)$ - et $Q_{LS}$ peuvent être mesurés. Employer un analyseur de réseau supposerait de procéder à une série de mesures et nécessiterait du temps, ce qui n'est pas réalisable en cours de production, où les cadences atteignent plusieurs dizaines de milliers de préformes traitées par heure.

En revanche, il est possible de réaliser ces mesures indirectement (et en temps réel) en mesurant, sur le câble **30**, la puissance réfléchie par la cavité **11**. En effet, la capacité de la cavité **11** à transmettre ou réfléchir les micro-ondes varie en fonction de la fréquence de celles-ci. La fréquence pour laquelle la transmission est maximale (qui est la fréquence de résonance) peut être mesurée au moyen d'un dispositif **32** de mesure de puissance (de type wattmètre ou bolomètre), monté sur le câble **30**.

Le dispositif **32** de mesure de puissance est configuré pour mesurer la puissance totale du signal parcourant le câble **30** coaxial. Cette puissance totale est égale à la puissance du signal incident augmenté de la puissance du signal réfléchi par la cavité **15**.

La puissance délivrée par le générateur **16** étant connue, la mesure de la puissance totale du signal parcourant le câble **30** coaxial permet, par simple soustraction, de calculer la puissance du signal réfléchi. Comme illustré sur la figure 2, le wattmètre **32** est relié à l'unité **27** de contrôle, qui assure la collecte des mesures et la réalisation des calculs subséquents.

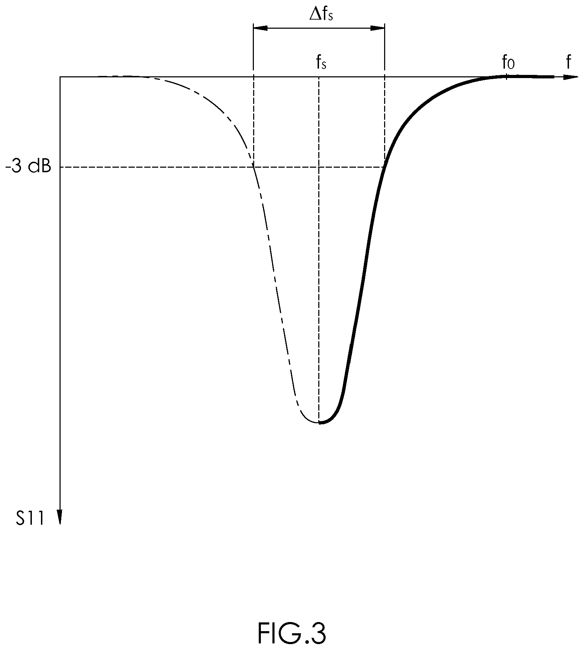

Lorsqu'une préforme **3** est introduite dans la cavité **15**, le générateur **16** est activé pour générer un champ micro-ondes à la fréquence $f_0$ de résonance de la cavité **15** vide. Puis la fréquence est modifiée jusqu'à atteindre la fréquence $f_s$ de résonance de la cavité **15** chargée. Cette fréquence $f_s$ est la fréquence qui minimise la puissance réfléchie par la cavité **15**. Comme illustré sur la figure 3, on peut à cet effet tracer les évolutions d'un paramètre, noté S11, caractérisant la réflexivité de la cavité **15**, c'est-à-dire sa capacité à réfléchir les micro-ondes. Le paramètre S11, exprimé en décibels (dB), est nul (ce qui correspond à une atténuation minimale de la réflexivité) lorsque la cavité **15** absorbe totalement les micro-ondes et présente un minimum (correspondant à une atténuation maximale de la réflexivité) lorsque la cavité **15** transmet la plus grande proportion possible de micro-ondes.

Il a été démontré que la courbe traçant les évolutions de S11 en fonction de la fréquence est globalement symétrique de part et d'autre de la fréquence $f_s$ de résonance de la cavité **15**. Aussi n'est-il nécessaire de faire varier la fréquence que de $f_0$ à $f_s$, $f_s$ annulant la tangente à la courbe. On peut alors reconstruire complètement la courbe en effectuant une symétrie par rapport à l'axe vertical passant par $f_s$, comme illustré en trait mixte sur la figure 3.

La mesure de $f_s$ permet ainsi, grâce à l'équation (2-36), de calculer ε' lorsque le volume $V_s$ de la charge (c'est-à-dire de la préforme **3**) est connu. Inversement, lorsque ε' est connu, il est possible de calculer à partir de $f_s$ le volume

$V_s$ (présumé inconnu) de la préforme **3**, puisque l'équation (2-36) peut également s'écrire de la manière suivante, équation (2-36') :

$$V_s = 0.539 \times \frac{V_C(f_0 - f_s)}{f_0(\varepsilon' - 1)}$$

De même, la mesure de $f_s$ permet, grâce à l'équation (2-37), de calculer $\varepsilon''$ lorsque le volume $V_s$ de la charge (c'est-à-dire de la préforme **3**) est connu. Inversement, lorsque $\varepsilon''$ est connu, il est possible de calculer à partir de $f_s$ le volume $V_s$ (présumé inconnu) de la préforme **3**, puisque l'équation (2-37) peut également s'écrire de la manière suivante, équation (2-37') :

$$V_s = 0{,}269\frac{V_C}{\varepsilon''} \times \left(\frac{1}{Q_{LS}} - \frac{1}{Q_{L0}}\right)$$

Il est toutefois nécessaire d'introduire les facteurs de qualité $Q_{L0}$ (de la cavité **15** vide) et $Q_{LS}$ (de la cavité **15** chargée).
Le facteur de qualité est défini par l'équation (2-22) de Xiang Li (op. cit.), qui fournit :

$$Q_{L0} = \frac{f_0}{\Delta f_0}$$

$$Q_{LS} = \frac{f_s}{\Delta f_s}$$

où $\Delta f_0$ est la bande passante de la courbe du coefficient de réflexion S11 de la cavité vide, pour une atténuation de -3dB, et $\Delta f_s$ la bande passante de la courbe du coefficient de réflexion S11 de la cavité **15** chargée également pour une atténuation de -3dB (figure 3).
Les équations qui viennent d'être présentées permettent, seules ou en combinaison (et dans des conditions opératoires qui seront décrites ci-après), de déterminer en cours de production :

- pour une préforme **3** dont le matériau est connu (ce qui fournit les paramètres $\varepsilon'$ et $\varepsilon''$), de déterminer son volume de matière ;
- inversement, pour une préforme **3** dont le volume $V_s$ de matière est connu, de déterminer les paramètres $\varepsilon'$ et $\varepsilon''$, dont on peut déduire la matière.

Dans les deux cas, on voit qu'une correspondance est nécessaire entre la matière et les paramètres $\varepsilon'$ et $\varepsilon''$ qui la caractérisent. Cette correspondance peut être établie au moyen de mesures réalisées hors production, au moyen d'un analyseur de réseau, en introduisant dans la cavité **15** une série de préformes de matières et de volumes connus, et en calculant pour chaque préforme ses paramètres $\varepsilon'$ et $\varepsilon''$ à l'aide des équations (2-36) et (2-37). On obtient ainsi une table de correspondance entre la matière, notée $M_i$ (i un entier compris entre 1 et $N$, et $N$ un entier supérieur ou égal à 2) et les valeurs respectives $\varepsilon'_i$ et $\varepsilon''_i$ des paramètres $\varepsilon'$ et $\varepsilon''$ :

| Matière | Paramètre $\varepsilon'$ | Paramètre $\varepsilon''$ |
|---|---|---|
| $M_1$ | $\varepsilon'_1$ | $\varepsilon''_1$ |
| $M_2$ | $\varepsilon'_2$ | $\varepsilon''_2$ |
| (...) | (...) | (...) |
| $M_i$ | $\varepsilon'_i$ | $\varepsilon''_i$ |
| (...) | (...) | (...) |
| $M_N$ | $\varepsilon'_N$ | $\varepsilon''_N$ |

En variante, cette table contient également, pour chaque matière, l'angle $\delta$ de perte. Dans ce cas, la table se présente comme suit :

| Matière | Paramètre $\varepsilon'$ | Paramètre $\varepsilon''$ | $\delta$ |
|---------|--------------------------|---------------------------|----------|
| $M_1$ | $\varepsilon'_1$ | $\varepsilon''_1$ | $\delta_1$ |
| $M_2$ | $\varepsilon'_2$ | $\varepsilon''_2$ | $\delta_2$ |
| (...) | (...) | (...) | (...) |
| $M_i$ | $\varepsilon'_i$ | $\varepsilon''_i$ | $\delta_i$ |
| (...) | (...) | (...) | (...) |
| $M_N$ | $\varepsilon'_N$ | $\varepsilon''_N$ | $\delta_N$ |

Comme nous l'avons déjà expliqué, $\varepsilon''$ varie en fonction de la température. Si la température ambiante de production est de 20°C environ dans la plupart des cas, une température supérieure n'est pas exclue. Pour couvrir la majorité des cas, il est envisageable de prévoir, pour $\varepsilon''$, plusieurs colonnes de valeurs selon la température.

Quoi qu'il en soit, sous la première forme ou la seconde, la table est mémorisée dans l'unité **27** de contrôle.

En production, deux cas peuvent se présenter.

Dans le premier cas, on suppose connue la matière (sélectionnée par exemple par un opérateur de maintenance parmi la liste de matières listées dans la table) de chaque préforme **3** d'une série de préformes présumées identiques destinées à être transformées en récipients **2** d'un modèle prédéterminé. On suppose également connue une valeur $V_0$, dite de référence, du volume de matière du modèle de préforme auquel sont supposées correspondre les préformes **3** de cette série, et l'on souhaite déterminer le volume $V_s$ de chaque préforme **3** pour vérifier s'il peut être décrété égal au volume $V_0$ du modèle (auquel cas la préforme **3** est déclarée conforme et peut être soumise au champ micro-ondes pour être chauffée) ou, au contraire, s'il doit être décrété différent du volume $V_0$ du modèle (auquel cas un signal d'alerte doit être généré en vue soit de stopper la production, soit d'éjecter automatiquement la préforme **3** pour l'empêcher d'atteindre l'unité **10** de formage). La valeur du volume $V_0$ du modèle est mémorisé dans l'unité **27** de contrôle après avoir, par exemple, été introduit par un opérateur de maintenance.

Dans ce premier cas, pour chaque préforme **3**, on procède comme suit.

On commence par charger la préforme **3** dans la cavité **15**.

L'unité **27** de contrôle commande ensuite, en pilotant le générateur **16**, la génération un flux incident de micro-ondes qui se transmet à la cavité **15** par le câble **30** coaxial et l'antenne **31**. La fréquence initiale des micro-ondes est la fréquence $f_0$ de la cavité **15** vide.

Sur commande de l'unité **27** de contrôle, le dispositif **32** de mesure de puissance mesure en temps réel la puissance réfléchie pour déterminer les variations du coefficient de réflexion S11 de la cavité **15** chargée, jusqu'à ce que la fréquence $f_s$ de résonance de la cavité **15** chargée soit atteinte. Les mesures sont transmises à l'unité **27** de contrôle qui construit la courbe et effectue les calculs mathématiques permettant de déterminer la fréquence $f_s$. Une fois déterminée, la fréquence $f_s$ est mémorisée dans l'unité **27** de contrôle.

La matière de la préforme **3** étant supposée connue, l'unité **27** de contrôle détermine, à partir de la table (mémorisée) de correspondance évoquée ci-dessus, l'un ou l'autre des paramètres $\varepsilon'$ et $\varepsilon''$ caractérisant la matière (dans le cas de $\varepsilon''$, la température ambiante peut être prise en compte pour sélectionner, dans la table, la colonne de valeurs de $\varepsilon''$ correspondant à cette température), puis applique alors l'une ou l'autre des équations (2-36') ou (2-37') pour calculer le volume $V_s$ de matière de la préforme **3** présente dans la cavité **15**.

Le volume $V_s$ ainsi calculé est comparé par l'unité **27** de contrôle au volume $V_0$ de référence.

Si le volume noté $V_s$ calculé est décrété égal au volume $V_0$ de référence (éventuellement avec une marge d'erreur, par ex. de 5% à 10% environ), alors la préforme **3** est décrétée conforme au modèle et l'unité **27** de contrôle commande en conséquence son conditionnement thermique en maintenant le champ électromagnétique résonant selon le mode $TM_{010}$ dans la cavité **15** pendant une durée prédéterminée correspondant à la durée nécessaire à la chauffe de la préforme **3** à une température supérieure à sa température de transition vitreuse (laquelle est d'environ 80°C pour le PET). Une légère variation de la fréquence ou de la puissance des micro-ondes peut, le cas échéant être commandée par l'unité **27** de contrôle.

Si, au contraire, le volume $V_s$ calculé est décrété différent du volume $V_0$ du modèle (c'est-à-dire, dans le cas où une marge d'erreur s'applique, si le volume $V_s$ est au-delà de la marge d'erreur), un signal d'alerte est généré. La production est alors stoppée (par exemple à l'initiative d'un opérateur chargé de production), ou la préforme 3 est automatiquement éjectée de la cavité **15** tandis que le générateur **16** est désactivé.

Dans un deuxième cas, on suppose connu le volume $V_s$ de matière de chaque préforme **3** d'une série de préformes présumées identiques destinées à être transformées en récipients **2** d'un modèle prédéterminé. Plus précisément, on suppose que ce volume $V_s$ est égal au volume $V_0$ de matière du modèle. La valeur du volume $V_0$ du modèle est mémorisé dans l'unité **27** de contrôle. La matière du modèle de préforme est également connue et mémorisée dans l'unité **27** de contrôle. La matière a par exemple été sélectionnée par un opérateur de maintenance avant le lancement de la production des récipients à partir de préformes **3** présumées correspondre à ce modèle. On note, pour ce modèle, $M_p$ (où p est un entier compris entre 1 et N) la matière, $\varepsilon'_p$ la constante diélectrique, $\varepsilon''_p$ le facteur de pertes diélectriques, et $\delta_p$ l'angle de perte.

On souhaite déterminer la matière de chaque préforme **3** pour vérifier si elle peut être décrétée correspondre à la matière $M_p$ du modèle (auquel cas la préforme **3** est déclarée conforme et peut être soumise au champ micro-ondes pour être chauffée) ou, au contraire, si la matière doit être décrétée différente de la matière du modèle (auquel cas un signal d'alerte doit être généré en vue soit de stopper la production, soit d'éjecter automatiquement la préforme **3** pour l'empêcher d'atteindre l'unité **10** de formage).

Dans ce deuxième cas, pour chaque préforme **3**, on procède comme suit.

On commence par charger la préforme **3** dans la cavité **15**.

L'unité **27** de contrôle commande ensuite, en pilotant le générateur **16**, la génération un flux incident de micro-ondes qui se transmet à la cavité **15** par le câble **30** coaxial et l'antenne **31.** La fréquence initiale des micro-ondes est la fréquence $f_0$ de la cavité **15** vide.

Sur commande de l'unité **27** de contrôle, le dispositif **32** de mesure de puissance mesure en temps réel la puissance réfléchie pour déterminer les variations du coefficient de réflexion S11 de la cavité **15** chargée, jusqu'à ce que la fréquence $f_s$ de résonance de la cavité **15** chargée soit atteinte. Les mesures sont transmises à l'unité **27** de contrôle qui construit la courbe et effectue les calculs mathématiques permettant de déterminer la fréquence $f_s$ et la bande passante $\Delta f_s$ (en l'espèce à -3dB, comme indiqué ci-dessus). Une fois déterminées, la fréquence $f_s$ et la bande passante $\Delta f_s$ sont mémorisées dans l'unité **27** de contrôle.

L'unité **27** de contrôle en déduit le facteur de qualité $Q_{LS}$ de la cavité **15** chargée, à l'aide de l'équation suivante (déjà évoquée) :

$$Q_{LS} = \frac{f_s}{\Delta f_s}$$

Selon un premier mode de réalisation, l'unité **27** de contrôle calcule ensuite la constante diélectrique $\varepsilon'$ du matériau à l'aide de l'équation (2-36) et la compare avec la constante diélectrique $\varepsilon'_p$ du matériau du modèle de préforme, telle que mémorisée dans la table en correspondance avec ce matériau.

Si la constante diélectrique $\varepsilon'$ est décrétée égale à la constante diélectrique $\varepsilon'_p$ du matériau du modèle de préforme (éventuellement avec une marge d'erreur, par ex. de 5% à 10% environ), alors la préforme **3** est décrétée conforme au modèle et l'unité **27** de contrôle commande en conséquence son conditionnement thermique en maintenant le champ électromagnétique résonant selon le mode TM$_{010}$ dans la cavité **15** pendant une durée prédéterminée correspondant à la durée nécessaire à la chauffe de la préforme **3** à une température supérieure à sa température de transition vitreuse (laquelle est d'environ 80°C pour le PET). Une légère variation de la fréquence ou de la puissance des micro-ondes peut, le cas échéant être commandée par l'unité **27** de contrôle.

Si, au contraire, la constante diélectrique $\varepsilon'$ est décrétée différente de la constante diélectrique $\varepsilon'_p$ du matériau du modèle de préforme (c'est-à-dire, dans le cas où une marge d'erreur s'applique, si la constante diélectrique $\varepsilon'$ est au-delà de la marge d'erreur), un signal d'alerte est généré. La production est alors stoppée (par exemple à l'initiative d'un opérateur chargé de production), ou la préforme **3** est automatiquement éjectée de la cavité **15** tandis que le générateur **16** est désactivé.

Selon un deuxième mode de réalisation, l'unité **27** de contrôle calcule le facteur $\varepsilon''$ de perte diélectrique du matériau à l'aide de l'équation (2-37) et le compare avec le facteur $\varepsilon''_p$ de perte diélectrique du matériau du modèle de préforme, telle que mémorisé dans la table en correspondance avec ce matériau (pour la bonne température, lorsque celle-ci est prise en compte).

Si le facteur $\varepsilon''$ de perte diélectrique est décrété égal au facteur $\varepsilon''_p$ de perte diélectrique du matériau du modèle de préforme (éventuellement avec une marge d'erreur, par ex. de 5% à 10% environ), alors la préforme **3** est décrétée conforme au modèle et l'unité **27** de contrôle commande en conséquence son conditionnement thermique en maintenant le champ électromagnétique résonant selon le mode TM$_{010}$ dans la cavité **15** pendant une durée prédéterminée correspondant à la durée nécessaire à la chauffe de la préforme **3** à une température supérieure à sa température de transition vitreuse (laquelle est d'environ 80°C pour le PET). Une légère variation de la fréquence ou de la puissance des micro-ondes peut, le cas échéant, être commandée par l'unité **27** de contrôle.

Si, au contraire, le facteur $\varepsilon''$ de perte diélectrique est décrété différent du facteur $\varepsilon''_p$ de perte diélectrique du matériau du modèle de préforme (c'est-à-dire, dans le cas où une marge d'erreur s'applique, si le facteur $\varepsilon''$ de perte

diélectrique est au-delà de la marge d'erreur), un signal d'alerte est généré. La production est alors stoppée (par exemple à l'initiative d'un opérateur chargé de production), ou la préforme **3** est automatiquement éjectée de la cavité **15** tandis que le générateur **16** est désactivé.

Le seul calcul de la constante diélectrique ε' ou du seul facteur ε" de perte diélectrique peut apparaître insuffisant pour déterminer avec une faible marge d'erreur le matériau de la préforme 3, car certains matériaux différents peuvent présenter des constantes diélectriques proches ou des facteurs de perte diélectrique proches. Il est donc préférable :

- soit de calculer à la fois la constante diélectrique ε' et le facteur ε" de perte diélectrique, et les comparer chacun respectivement à la constante $\varepsilon'_p$ diélectrique et au facteur $\varepsilon''_p$ de perte du matériau du modèle de préforme **3** (dans ce cas, la préforme **3** est décrétée conforme si les deux paramètres ε' et ε" sont conjointement décrétés égaux aux valeurs de référence respectives du modèle de préforme, ou un signal d'alerte est généré si l'un au moins des paramètres est décrété différent du paramètre correspondant du modèle de préforme **3**),
- soit de calculer à la fois la constante diélectrique ε' et le facteur ε" et de calculer ensuite l'angle δ de perte de la préforme **3** au moyen de l'approximation suivante (évoquée ci-dessus) :

$$\delta \cong \frac{\varepsilon''}{\varepsilon'}$$

et de comparer l'angle δ de perte ainsi calculé à l'angle $\delta_p$ de perte du matériau du modèle de préforme. Dans ce cas, la préforme est décrétée conforme si l'angle δ de perte est décrété égal à l'angle $\delta_p$ de perte modèle de préforme **3** (avec une marge d'erreur, par exemple de l'ordre de 5% à 10%), ou non conforme (avec génération d'un signal d'alerte) si l'angle δ de perte est décrété différent de l'angle $\delta_p$ de perte du matériau de la préforme modèle, c'est-à-dire que l'angle δ de perte est au-delà de la marge d'erreur.

A la sortie de l'unité **7** de conditionnement thermique, un dispositif **33** de transfert (par ex. une roue pourvue de pinces **9** élastiques) assure l'évacuation des préformes **3** chaudes et le chargement de chacune de ces préformes **3** dans un moule **12** en vue de leur formage. Sur la figure 1, des flèches illustrent le sens de déplacement des préformes **3** dans l'installation 1. La vue est schématique ; l'échelle n'est pas nécessairement respectée.

La méthode qui vient d'être décrite permet d'identifier, parmi un lot de préformes en cours de conditionnement thermique, une préforme non conforme à un modèle pour lequel les réglages (notamment fréquence et puissance des micro-ondes) ont été effectués et de prendre des mesures pour éviter que cette absence de conformité ne provoque des dommages à l'installation, notamment : arrêt de l'unité de conditionnement thermique, éjection automatique de la préforme. Le flux de micro-ondes peut également être coupé (au niveau du générateur **16**) pour limiter la consommation d'énergie alors même que la chauffe de la préforme **3** non conforme est inutile.

En variante, et si le générateur **16** et la cavité **15** le permettent, la fréquence (et éventuellement la puissance) des micro-ondes est (sont) adaptée(s) pour permettre une chauffe de la préforme non conforme, de sorte à ne pas ralentir les cadences. Le récipient **2** obtenu avec cette préforme peut alors être éjecté à la sortie de l'unité **10** de formage. L'éjection d'un récipient est plus simple que celle d'une préforme, en raison de la différence de taille et de l'écartement entre deux récipients successifs, supérieur à l'écartement entre deux préformes successives.

## Revendications

1. Procédé de conditionnement thermique de préformes (**3**) de récipients en matière plastique, dans une cavité (**15**) délimitée par des parois conductrices de l'électricité, au moyen d'un champ micro-ondes dans une plage prédéterminée de fréquences, généré par un générateur (**16**) à état solide couplé à la cavité au moyen d'un câble (**32**) de liaison, ce procédé comprenant les opérations consistant à :

- mémoriser au moins un paramètre caractéristique, prédéterminé, de la matière, ou le volume, prédéterminé, de matière des préformes (**3**) ;
- charger une préforme (**3**) dans la cavité (**15**) ;
- générer un flux incident de micro-ondes au moyen du générateur (**16**) à état solide ;
- régler la fréquence d'émission du flux incident de micro-ondes à une fréquence de résonance de la cavité (**15**) chargée ;
- mémoriser cette fréquence de résonance ;
- à partir et de la fréquence de résonance de la cavité (**15**) chargée et du paramètre de matière mémorisé ou du volume, mémorisé, de matière de la préforme (**3**), calculer respectivement :

◦ le volume de matière de la préforme (**3**), ou
◦ au moins un paramètre caractéristique de la matière de la préforme (**3**) ;

- comparer le volume de matière, respectivement le paramètre caractéristique de la matière, à une valeur de référence ;
- si le volume de matière, respectivement le paramètre caractéristique de la matière, est décrété différent de la valeur de référence, générer un signal d'alerte.

2.  Procédé selon la revendication 1, **caractérisé en ce que** le paramètre caractéristique de la matière mémorisé est sa constante diélectrique $\varepsilon$', et **en ce que** le volume de la préforme (**3**) est calculé à partir de l'équation suivante :

$$V_s = 0.539 \times \frac{V_C (f_0 - f_s)}{f_0 (\varepsilon' - 1)}$$

où :

- $V_s$ est le volume de matière de la préforme (**3**) ;
- $V_C$ est le volume de la cavité (**15**) ;
- $f_0$ est la fréquence de résonance de la cavité (**15**) vide ;
- $f_s$ est la fréquence de résonance de la cavité (**15**) chargée ;
- $(f_0 - f_s)$ est le décalage de fréquence entre la cavité (**15**) vide et la cavité (**15**) chargée ;

3.  Procédé selon la revendication 1, **caractérisé en ce que** le paramètre caractéristique de la matière est son facteur de perte diélectrique $\varepsilon$'', et **en ce que** le volume de la préforme (**3**) est calculé à partir de l'équation suivante :

$$V_s = 0{,}269 \frac{V_C}{\varepsilon''} \times \left( \frac{1}{Q_{LS}} - \frac{1}{Q_{L0}} \right)$$

Où :

- $V_s$ est le volume de matière de la préforme (**3**) ;
- $V_C$ est le volume de la cavité (**15**) ;
- $Q_{L0}$ est le facteur de qualité de la cavité (**15**) vide, tel que :

$$Q_{L0} = \frac{f_0}{\Delta f_0}$$

- $Q_{LS}$ est le facteur de qualité de la cavité (**15**) chargée, tel que :

$$Q_{LS} = \frac{f_s}{\Delta f_s}$$

- $f_0$ est la fréquence de résonance de la cavité (**15**) vide ;
- $f_s$ est la fréquence de résonance de la cavité (**15**) chargée ;
- $\Delta f_0$ est la bande passante de la courbe du coefficient de réflexion S11 de la cavité (**15**) vide, pour une atténuation de -3dB,
- $\Delta f_s$ est la bande passante de la courbe du coefficient de réflexion S11 de la cavité (**15**) chargée, pour une atténuation de -3dB.

4.  Procédé selon la revendication 1, **caractérisé en ce que**, le volume de matière des préformes, prédéterminé, étant mémorisé, le paramètre caractéristique de la matière est sa constante diélectrique $\varepsilon$', calculée à partir de l'équation suivante :

$$\varepsilon' = 1 + 0.539 \times \frac{V_C(f_0 - f_s)}{V_s \cdot f_0}$$

- $V_s$ est le volume de matière de la préforme (**3**), présumée correspondre au modèle ;
- $V_C$ est le volume de la cavité (**15**) ;
- $f_0$ est la fréquence de résonance de la cavité (**15**) vide ;
- $f_s$ est la fréquence de résonance de la cavité (**15**) chargée ;
- ($f_0$ - $f_s$) est le décalage de fréquence entre la cavité (**15**) vide et la cavité (**15**) chargée.

5. Procédé selon la revendication 1, **caractérisé en ce que**, le volume de matière du modèle de préforme, prédéterminé, étant mémorisé, le paramètre caractéristique de la matière est son facteur de perte diélectrique $\varepsilon''$, calculé à partir de l'équation suivante :

$$\varepsilon'' = 0{,}269 \frac{V_C}{V_s} \times \left( \frac{1}{Q_{LS}} - \frac{1}{Q_{L0}} \right)$$

où :

- $V_s$ est le volume de matière de la préforme **3** ;
- $V_C$ est le volume de la cavité (**15**) ;
- $Q_{L0}$ est le facteur de qualité de la cavité (**15**) vide, tel que :

$$Q_{L0} = \frac{f_0}{\Delta f_0}$$

- $Q_{LS}$ est le facteur de qualité de la cavité (**15**) chargée, tel que :

$$Q_{LS} = \frac{f_s}{\Delta f_s}$$

- $f_0$ est la fréquence de résonance de la cavité (**15**) vide ;
- $f_s$ est la fréquence de résonance de la cavité (**15**) chargée ;
- $\Delta f_0$ est la bande passante de la courbe du coefficient de réflexion S11 de la cavité (**15**) vide, pour une atténuation de -3dB,
- $\Delta f_s$ est la bande passante de la courbe du coefficient de réflexion S11 de la cavité (**15**) chargée, pour une atténuation de -3dB.

6. Procédé selon la revendication 1, **caractérisé en ce que**, le volume de matière du modèle de préforme, prédéterminé, étant mémorisé, le paramètre caractéristique de la matière est son angle de perte diélectrique $\delta$, calculé à partir des équations suivantes :

$$\varepsilon' = 1 + 0.539 \times \frac{V_C(f_0 - f_s)}{V_s \cdot f_0}$$

$$\varepsilon'' = 0{,}269 \frac{V_C}{V_s} \times \left( \frac{1}{Q_{LS}} - \frac{1}{Q_{L0}} \right)$$

$$\delta \cong \frac{\varepsilon''}{\varepsilon'}$$

où :

- $\varepsilon'$ est la constante diélectrique de la matière ;
- $\varepsilon''$ est le facteur de perte diélectrique de la matière ;
- $V_s$ est le volume de matière de la préforme (**3**) ;
- $V_C$ est le volume de la cavité (**15**) ;
- $Q_{L0}$ est le facteur de qualité de la cavité (**15**) vide, tel que :

$$Q_{L0} = \frac{f_0}{\Delta f_0}$$

- $Q_{LS}$ est le facteur de qualité de la cavité (**15**) chargée, tel que :

$$Q_{LS} = \frac{f_s}{\Delta f_s}$$

- $f_0$ est la fréquence de résonance de la cavité (**15**) vide ;
- $f_s$ est la fréquence de résonance de la cavité (**15**) chargée ;
- $\Delta f_0$ est la bande passante de la courbe du coefficient de réflexion S11 de la cavité (**15**) vide, pour une atténuation de -3dB,
- $\Delta f_s$ est la bande passante de la courbe du coefficient de réflexion S11 de la cavité (**15**) chargée, pour une atténuation de -3dB.

7. Procédé selon l'une des revendications précédentes, comprenant les opérations suivantes, déclenchées par le signal d'alerte :

- coupure du flux de micro-ondes ;
- éjection de la préforme (**3**) de la cavité (**15**).

8. Procédé selon l'une des revendications précédentes, **caractérisé en ce que** la détermination de la puissance réfléchie comprend les opérations consistant à :

- mesurer la puissance du flux de micro-ondes transitant par le câble (**30**) de liaison, dite puissance résultante ;
- calculer la puissance réfléchie par soustraction de la puissance résultante à la puissance incidente.

**Patentansprüche**

1. Verfahren zur thermischen Konditionierung von Vorformlingen (3) von Kunststoffbehältern in einem von stromleitenden Wänden begrenzten Hohlraum (15) mittels eines Mikrowellenfelds in einem vorbestimmten Frequenzbereich, das von einem Festkörpergenerator (16) erzeugt wird, der mittels eines Verbindungskabels (32) mit dem Hohlraum verbunden ist, wobei dieses Verfahren die folgenden Vorgänge enthält, die darin bestehen:

- mindestens einen vorbestimmten charakteristischen Parameter des Werkstoffs oder das vorbestimmte Werkstoffvolumen der Vorformlinge (3) zu speichern;
- einen Vorformling (3) in den Hohlraum (15) zu laden;
- einen auftreffenden Mikrowellenfluss mittels des Festkörpergenerators (16) zu erzeugen;
- die Emissionsfrequenz des auftreffenden Mikrowellenflusses auf eine Resonanzfrequenz des beladenen Hohlraums (15) einzustellen;
- diese Resonanzfrequenz zu speichern;
- ausgehend von der Resonanzfrequenz des beladenen Hohlraums (15) und dem gespeicherten Werkstoffparameter oder dem gespeicherten Werkstoffvolumen des Vorformlings (3) jeweils zu berechnen:

  ◦ das Werkstoffvolumen des Vorformlings (3), oder
  ◦ mindestens einen charakteristischen Parameter des Werkstoffs des Vorformlings (3);

- das Werkstoffvolumen bzw. den charakteristischen Parameter des Werkstoffs mit einem Bezugswert zu vergleichen;

- wenn das Werkstoffvolumen bzw. der charakteristische Parameter des Werkstoffs als anders als der Bezugswert bestimmt wird, ein Warnsignal zu erzeugen.

2. Verfahren nach Anspruch 1, **dadurch gekennzeichnet, dass** der gespeicherte charakteristische Parameter des Werkstoffs seine Dielektrizitätskonstante $\varepsilon'$ ist, und dass das Volumen des Vorformlings (3) ausgehend von der folgenden Gleichung berechnet wird:

$$V_S = 0{,}539 \times \frac{V_C(f_0 - f_S)}{f_0(\varepsilon' - 1)}$$

wobei:

- $V_s$ das Werkstoffvolumen des Vorformlings (3) ist;
- $V_C$ das Volumen des Hohlraums (15) ist;
- $f_0$ die Resonanzfrequenz des leeren Hohlraums (15) ist;
- $f_s$ die Resonanzfrequenz des beladenen Hohlraums (15) ist;
- $(f_0 - f_s)$ die Frequenzverschiebung zwischen dem leeren Hohlraum (15) und dem beladenen Hohlraum (15) ist.

3. Verfahren nach Anspruch 1, **dadurch gekennzeichnet, dass** der charakteristische Parameter des Werkstoffs sein dielektrischer Verlustfaktor $\varepsilon''$ ist, und dass das Volumen des Vorformlings (3) ausgehend von der folgenden Gleichung berechnet wird:

$$V_S = 0{,}269 \frac{V_C}{\varepsilon''} \times \left( \frac{1}{Q_{LS}} - \frac{1}{Q_{L0}} \right)$$

wobei:

- $V_s$ das Werkstoffvolumen des Vorformlings (3) ist;
- $V_C$ das Volumen des Hohlraums (15) ist;
- $Q_{L0}$ der Qualitätsfaktor des leeren Hohlraums (15) ist, derart, dass gilt:

$$Q_{L0} = \frac{f_0}{\Delta f_0}$$

- $Q_{LS}$ der Qualitätsfaktor des beladenen Hohlraums (15) ist, derart, dass gilt:

$$Q_{LS} = \frac{f_S}{\Delta f_S}$$

- $f_0$ die Resonanzfrequenz des leeren Hohlraums (15) ist;
- $f_s$ die Resonanzfrequenz des beladenen Hohlraums (15) ist;
- $\Delta f_0$ die Bandbreite der Kurve des Reflexionskoeffizienten S11 des leeren Hohlraums (15) für eine Dämpfung von -3dB ist,
- $\Delta f_s$ die Bandbreite der Kurve des Reflexionskoeffizienten S11 des beladenen Hohlraums (15) für eine Dämpfung von -3dB ist.

4. Verfahren nach Anspruch 1, **dadurch gekennzeichnet, dass**, da das vorbestimmte Werkstoffvolumen der Vorformlinge gespeichert ist, der charakteristische Parameter des Werkstoffs seine Dielektrizitätskonstante $\varepsilon'$ ist, berechnet ausgehend von der folgenden Gleichung:

$$\varepsilon' = 1 + 0{,}539 \times \frac{V_C(f_0 - f_S)}{V_S \cdot f_0}$$

- $V_s$ ist das Werkstoffvolumen des Vorformlings (3), von dem angenommen wird, dass er dem Modell entspricht;
- $V_C$ ist das Volumen des Hohlraums (15);
- $f_0$ ist die Resonanzfrequenz des leeren Hohlraums (15) ;
- $f_s$ ist die Resonanzfrequenz des beladenen Hohlraums (15);
- ($f_0$ - $f_s$) ist die Frequenzverschiebung zwischen dem leeren Hohlraum (15) und dem beladenen Hohlraum (15).

5. Verfahren nach Anspruch 1, **dadurch gekennzeichnet, dass**, da das vorbestimmte Werkstoffvolumen des Vorformlingmodells gespeichert ist, der charakteristische Parameter des Werkstoffs sein dielektrischer Verlustfaktor $\varepsilon''$ ist, berechnet ausgehend von der folgenden Gleichung:

$$\varepsilon'' = 0{,}269 \frac{V_C}{V_S} \times \left( \frac{1}{Q_{LS}} - \frac{1}{Q_{L0}} \right)$$

wobei:

- $V_s$ das Werkstoffvolumen des Vorformlings (3) ist;
- $V_C$ das Volumen des Hohlraums (15) ist;
- $Q_{L0}$ der Qualitätsfaktor des leeren Hohlraums (15) ist, derart, dass gilt:

$$Q_{L0} = \frac{f_0}{\Delta f_0}$$

- $Q_{LS}$ der Qualitätsfaktor des beladenen Hohlraums (15) ist, derart, dass gilt:

$$Q_{LS} = \frac{f_S}{\Delta f_S}$$

- $f_0$ die Resonanzfrequenz des leeren Hohlraums (15) ist;
- $f_s$ die Resonanzfrequenz des beladenen Hohlraums (15) ist;
- $\Delta f_0$ die Bandbreite der Kurve des Reflexionskoeffizienten S11 des leeren Hohlraums (15) für eine Dämpfung von -3dB ist,
- $\Delta f_s$ die Bandbreite der Kurve des Reflexionskoeffizienten S11 des beladenen Hohlraums (15) für eine Dämpfung von -3dB ist.

6. Verfahren nach Anspruch 1, **dadurch gekennzeichnet, dass**, da das vorbestimmte Werkstoffvolumen des Vorformlingmodells gespeichert ist, der charakteristische Parameter des Werkstoffs sein dielektrischer Verlustwinkel $\delta$ ist, berechnet ausgehend von den folgenden Gleichungen:

$$\varepsilon' = 1 + 0{,}539 \times \frac{V_C(f_0 - f_S)}{V_S \cdot f_0}$$

$$\varepsilon'' = 0{,}269 \frac{V_C}{V_S} \times \left( \frac{1}{Q_{LS}} - \frac{1}{Q_{L0}} \right)$$

$$\delta \cong \frac{\varepsilon''}{\varepsilon'}$$

wobei:

- $\varepsilon'$ die Dielektrizitätskonstante des Werkstoffs ist;
- $\varepsilon''$ der dielektrische Verlustfaktor des Werkstoffs ist;
- $V_s$ das Werkstoffvolumen des Vorformlings (3) ist;

- $V_C$ das Volumen des Hohlraums (15) ist;
- $Q_{L0}$ der Qualitätsfaktor des leeren Hohlraums (15) ist, derart, dass gilt:

$$Q_{L0} = \frac{f_0}{\Delta f_0}$$

- $Q_{LS}$ der Qualitätsfaktor des beladenen Hohlraums (15) ist, derart, dass gilt:

$$Q_{LS} = \frac{f_S}{\Delta f_S}$$

- $f_0$ die Resonanzfrequenz des leeren Hohlraums (15) ist;
- $f_s$ die Resonanzfrequenz des beladenen Hohlraums (15) ist;
- $\Delta f_0$ die Bandbreite der Kurve des Reflexionskoeffizienten S11 des leeren Hohlraums (15) für eine Dämpfung von -3dB ist,
- $\Delta f_s$ die Bandbreite der Kurve des Reflexionskoeffizienten S11 des beladenen Hohlraums (15) für eine Dämpfung von -3dB ist.

7.  Verfahren nach einem der vorhergehenden Ansprüche, das die folgenden Vorgänge enthält, die durch das Warnsignal ausgelöst werden:

    - Abschalten des Mikrowellenflusses;
    - Auswurf des Vorformlings (3) aus dem Hohlraum (15).

8.  Verfahren nach einem der vorhergehenden Ansprüche, **dadurch gekennzeichnet, dass** die Bestimmung der reflektierten Leistung die Vorgänge enthält, die darin bestehen:

    - die Leistung des durch das Verbindungskabel (30) gehenden Mikrowellenflusses, resultierende Leistung genannt, zu messen;
    - die reflektierte Leistung durch Subtraktion der resultierenden Leistung von der auftreffenden Leistung zu berechnen.

**Claims**

1.  Process for heat treating preforms (**3**) of containers made of plastic material, in a cavity (**15**) bounded by electrically conductive walls, by means of a microwave field in a preset frequency range, said microwave field being generated by a solid-state generator (**16**) coupled to the cavity by means of a linking cable (**32**), this process comprising operations consisting in:

    - storing in memory at least one predetermined characteristic parameter of the material, or the predetermined volume of material of the preforms (**3**);
    - loading a preform (**3**) into the cavity (**15**);
    - generating an incident microwave flux by means of the solid-state generator (**16**);
    - adjusting the emission frequency of the incident microwave flux to a resonant frequency of the loaded cavity (**15**);
    - storing in memory this resonant frequency;
    - from the resonant frequency of the loaded cavity (**15**) and from the material parameter stored in memory or the volume, stored in memory, of material of the preform (**3**), calculating, respectively:

        ◦ the volume of material of the preform (**3**), or
        ◦ at least one characteristic parameter of the material of the preform (**3**);

    - comparing each of the volume of material and the characteristic parameter of the material to a reference value;
    - generating an alarm signal if either of the volume of material and the characteristic parameter of the material is decreed to be different from the reference value.

2. Process according to Claim 1, **characterized in that** the characteristic parameter of the material stored in memory is its dielectric constant $\varepsilon'$, and **in that** the volume of the preform (**3**) is calculated using the following equation:

$$V_s = 0.539 \times \frac{V_C(f_0 - f_1)}{f_0(\varepsilon' - 1)}$$

where:

- $V_s$ is the volume of material of the preform (**3**);
- $V_C$ is the volume of the cavity (**15**);
- $f_0$ is the resonant frequency of the empty cavity (**15**);
- $f_1$ is the resonant frequency of the loaded cavity (**15**);
- $(f_0 - f_1)$ is the frequency shift between the empty cavity (**15**) and the loaded cavity (**15**).

3. Process according to Claim 1, **characterized in that** the characteristic parameter of the material is its dielectric loss factor $\varepsilon''$, and **in that** the volume of the preform (**3**) is calculated using the following equation:

$$V_s = 0.269 \frac{V_C}{\varepsilon''} \times \left( \frac{1}{Q_{LS}} - \frac{1}{Q_{L0}} \right)$$

where:

- $V_s$ is the volume of material of the preform (**3**);
- $V_C$ is the volume of the cavity (**15**);
- $Q_{L0}$ is the quality factor of the empty cavity (**15**), such that:

$$Q_{L0} = \frac{f_0}{\Delta f_0}$$

- $Q_{LS}$ is the quality factor of the loaded cavity (**15**), such that:

$$Q_{L0} = \frac{f_s}{\Delta f_s}$$

- $f_0$ is the resonant frequency of the empty cavity (**15**);
- $f_s$ is the resonant frequency of the loaded cavity (**15**);
- $\Delta f_0$ is the passband of the curve of the reflection coefficient S11 of the empty cavity (**15**), for an attenuation of -3 dB;
- $\Delta f_s$ is the passband of the curve of the reflection coefficient S11 of the loaded cavity (**15**), for an attenuation of -3 dB.

4. Process according to Claim 1, **characterized in that**, the predetermined volume of material of the preforms being stored in memory, the characteristic parameter of the material is its dielectric constant $\varepsilon'$, calculated using the following equation:

$$\varepsilon' = 1 + 0.539 \times \frac{V_C(f_0 - f_1)}{V_s \cdot f_0}$$

- $V_s$ is the volume of material of the preform (**3**), presumed to correspond to the model;
- $V_C$ is the volume of the cavity (**15**);
- $f_0$ is the resonant frequency of the empty cavity (**15**);
- $f_s$ is the resonant frequency of the loaded cavity (**15**);
- $(f_0 - f_1)$ is the frequency shift between the empty cavity (**15**) and the loaded cavity (**15**).

5. Process according to Claim 1, **characterized in that**, the predetermined volume of material of the preform model being stored in memory, the characteristic parameter of the material is its dielectric loss factor $\varepsilon''$, calculated using the following equation:

$$\varepsilon'' = 0.269 \frac{V_C}{V_S} \times \left( \frac{1}{Q_{LS}} - \frac{1}{Q_{L0}} \right)$$

where:

- $V_S$ is the volume of material of the preform (**3**);
- $V_C$ is the volume of the cavity (**15**);
- $Q_{L0}$ is the quality factor of the empty cavity (**15**), such that:

$$Q_{L0} = \frac{f_0}{\Delta f_0}$$

- $Q_{LS}$ is the quality factor of the loaded cavity (**15**), such that:

$$Q_{L0} = \frac{f_s}{\Delta f_s}$$

- $f_0$ is the resonant frequency of the empty cavity (**15**);
- $f_s$ is the resonant frequency of the loaded cavity (**15**);
- $\Delta f_0$ is the passband of the curve of the reflection coefficient S11 of the empty cavity (**15**), for an attenuation of -3 dB;
- $\Delta f_s$ is the passband of the curve of the reflection coefficient S11 of the loaded cavity (**15**), for an attenuation of -3 dB.

6. Process according to Claim 1, **characterized in that**, the predetermined volume of material of the preform model being stored in memory, the characteristic parameter of the material is its dielectric loss angle $\delta$, calculated using the following equations:

$$\varepsilon' = 1 + 0.539 \times \frac{V_C (f_0 - f_1)}{V_S \cdot f_0}$$

$$\varepsilon'' = 0.269 \frac{V_C}{V_S} \times \left( \frac{1}{Q_{LS}} - \frac{1}{Q_{L0}} \right)$$

$$\delta \cong \frac{\varepsilon''}{\varepsilon'}$$

where:

- $\varepsilon'$ is the dielectric constant of the material;
- $\varepsilon''$ is the dielectric loss factor of the material;
- $V_S$ is the volume of material of the preform (**3**);
- $V_C$ is the volume of the cavity (**15**);
- $Q_{L0}$ is the quality factor of the empty cavity (**15**), such that:

$$Q_{L0} = \frac{f_0}{\Delta f_0}$$

- $Q_{LS}$ is the quality factor of the loaded cavity (**15**), such that:

$$Q_{L0} = \frac{f_s}{\Delta f_s}$$

- $f_0$ is the resonant frequency of the empty cavity (**15**);
- $f_s$ is the resonant frequency of the loaded cavity (**15**);
- $\Delta f_0$ is the passband of the curve of the reflection coefficient S11 of the empty cavity (**15**), for an attenuation of -3 dB;
- $\Delta f_s$ is the passband of the curve of the reflection coefficient S11 of the loaded cavity (**15**), for an attenuation of -3 dB.

7. Process according to one of the preceding claims, comprising the following operations, triggered by the alarm signal:

- stopping the microwave flux;
- projecting the preform (**3**) from the cavity (**15**).

8. Process according to one of the preceding claims, **characterized in that** the determination of the reflected power comprises operations consisting in:

- measuring the power of the microwave flux transiting through the linking cable (**30**), said power being called the resultant power;
- calculating the reflected power by subtracting the resultant power from the incident power.

1/3

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2647485 A, Procomac

### Littérature non-brevet citée dans la description

- **P. LEBAUDY et al.** Conditionnement thermique par micro-ondes de préformes avant soufflage. *Récents Progrès en Génie des Procédés,* 2005
- **HERBERT L. KRAUS et al.** Solid State Radio Engineering. John Wiley & Sons, 1980
- **STEPHEN F. ADAM.** Microwave theory and applications. *Englewood cliffs,* 1969
- **OWEN E. MAYNARD.** Solid State SPS Microwave Generation and Transmission Study. *NASA Scientific and technical,* 1980

- **P. LEBAUDY.** Conditionnement thermique par micro-ondes de préformes avant soufflage. *Récents Progrès en Génie des Procédés,* 2005
- **A. FAHRAT.** Vapo-Diffusion assistée par Micro-ondes : Conception, Optimisation et Application. *Thèse de l'Université d'Avignon,* Novembre 2010
- **XIANG LI et al.** Design of a Cylindrical Cavity Resonator for Measurements of Electrical Properties of Dielectric Materials. *Thèse de Master en électronique,* Septembre 2010, 28, , 29